# DEMANDE DE BREVET EUROPEEN

(11) **EP 1 477 297 A2**
(43) Date de publication de la demande: **17.11.2004**
(21) Numéro de dépôt: 04009764.4
(22) Date de dépôt: 24.04.2004
(51) Int. Cl.: B31B 1/74, B31B 1/06, B31B 1/16

(54) **Procédé de contrôle de la qualité d'éléments plats et dispositif pour la mise en oeuvre de ce procédé**

(30) Priorité: 16.05.2003 CH 8732003
(71) Demandeur: BOBST S.A., 1001 Lausanne (CH)
(72) Inventeur: Alonso, Jeronimo, 1066 Epalinges (CH); Strasser, Georg, 9214 Kradolf (CH)
(74) Mandataire: Colomb, Claude

(57) **Abrégé**

Procédé et dispositif indépendant pour le contrôle de la qualité de poses (11) issues d'une machine produisant des poses (11) d'au moins un certain type, consistant à :
- effectuer une phase de reconnaissance desdits types de poses possibles,
- introduire un paramètre de consigne (n) définissant un nombre choisi de poses par pile,
- charger une pile (21) dans le dispositif (30),
- faire défiler les poses (11) de la pile (21) au travers d'une zone d'auscultation (60) permettant de lire la qualité de l'impression et/ou du découpage desdites poses (11),
- définir à quel type la pose (11) auscultée correspond le mieux,
- éjecter la pose si elle présente des défauts d'impression et/ou de découpage,
- empiler les poses auscultées qui n'ont pas été éjectées pour former une nouvelle pile (22) jusqu'à ce qu'elle comprenne n poses (11),
- retourner à la 4^{ème} étape.

## Description

La présente invention a pour objet un procédé de contrôle de la qualité d'éléments plats et un dispositif pour la mise en oeuvre de ce procédé, notamment pour les machines de production d'emballages destinées par exemple à la fabrication de boîtes pliantes à partir d'une matière en bande ou en feuilles comme le carton.

De telles machines comprennent plusieurs stations placées les unes à la suite des autres qui permettent d'imprimer la matière utilisée, de la découper selon une forme donnée à l'aide d'un outil plan ou rotatif, d'éjecter les déchets intercalaires résultant du découpage, puis de contrôler la qualité de la production avant de collecter les découpes de boîtes, ou poses, dans une station de réception.

Le contrôle de la qualité est une opération nécessaire lorsque l'on veut pouvoir garantir qu'une production ne sera pas entachée par des défauts d'impression jugés comme étant inacceptables en fonction d'un niveau de qualité élevé. Ce contrôle est généralement effectué de manière automatique dans la ligne de production afin de pouvoir éjecter, avant leur empilement dans la station de réception, les poses qui ne sont pas conformes aux exigences minimales de qualité d'impression et/ou de découpage par rapport à cette impression.

On connaît déjà des dispositifs permettant d'effectuer de tels contrôles dans une installation de production d'emballages. L'un de ces dispositifs, décrit dans le brevet CH689770, comprend une caméra associée à un dispositif de traitement d'image opérant de façon à détecter et à mémoriser la position de marques de repérage disposées sur le déchet frontal d'une feuille. Ce déchet frontal offre également une surface de préhension nécessaire à une barre de pinces pour saisir chaque feuille et les emmener, successivement de la première à la dernière station, grâce à un train de chaînes sans fin auquel est reliée la barre de pinces. La caméra permet alors de réaliser une image du déchet frontal où se trouvent les marques de repérage d'impression et de découpage. Par comparaison avec une image de référence, le système de traitement d'image est ensuite capable de déterminer si les tolérances en matière de qualité d'impression et de découpage sont respectées. Fonctionnant à satisfaction, ce système se limite toutefois à un contrôle du repérage des couleurs entre elles et à un contrôle de la position de l'impression par rapport au découpage mais ne permet pas de détecter des défauts d'impression situés n'importe où sur toute l'étendue de la surface de l'impression.

En effet, chacun des groupes imprimeurs de la station d'impression est susceptible d'engendrer différents défauts pouvant prendre l'aspect de traînées, de bavures, de taches, de variations d'intensités ou encore de trous d'impression par exemple. Le dispositif du brevet CH692847, bien que spécialisé dans l'auscultation de surfaces spéculaires, donne un exemple d'une machine permettant de détecter ce genre de défauts sur la surface de toute une bande imprimée. La détection des défauts s'opère sur toute l'étendue d'un format d'impression au moyen d'une caméra, puis à l'aide d'une comparaison avec l'impression d'un format modèle unique, mémorisé. Le format d'impression d'une bande comprend généralement une pluralité de poses judicieusement disposées les unes à côté des autres afin de minimiser autant que possible les déchets intercalaires. Le contour de chacune de ces poses correspond alors à une boîte mise à plat, sous une forme développée. Le format maximum d'une impression est déterminé par les dimensions géométriques des cylindres des groupes imprimeurs, à savoir par la largeur et la circonférence des cylindres imprimeurs, ou par la largeur du support d'impression, à savoir la largeur des feuilles ou celle de la bande travaillée.

Lorsqu'un défaut d'impression est détecté par la caméra, il convient de repérer la portion de la bande entachée dudit défaut de façon à pouvoir l'éjecter plus en aval, généralement après son découpage en poses séparées. Il est en effet plus aisé d'éjecter de petites surfaces déjà séparées plutôt que de chercher à éliminer une feuille entière ou une portion d'une bande équivalente à toute la surface d'un format. La taille de ces formats est souvent importante et peut être typiquement de l'ordre de ½ m² à 1 m² par exemple. L'opération de découpage s'effectue soit rotativement par le passage du support imprimé entre un cylindre découpeur et un contre-cylindre, soit à plat dans une presse à platine équipée d'un outil plan de découpe animé d'un mouvement vertical cyclique. De tels outils de découpage sont décrits en détail respectivement dans la demande de brevet EP1060850 et dans le brevet CH689975.

L'éjection des portions gâchées est une opération qui est généralement liée au contrôle de la qualité de l'impression au sein d'une ligne de production. Plus généralement, elle en découle même directement.

Dans les dispositifs connus à ce jour, on a déjà pensé à éjecter toute une lignée de poses découpées, au moyen d'un volet basculable occupant toute la largeur de la machine. Cette manière de faire, décrite dans le brevet CH633761, présente l'inconvénient de générer une grande quantité de gâche inutile du fait que les poses, même dépourvues de tout défaut d'impression, qui jouxtent la pose défectueuse de la même lignée sont également éjectées.

Dans le brevet US5235883, il a été prévu un système d'éjection à deux volets disposés côte à côte et occupant toute la largeur de la bande découpée. De ce fait il devient possible d'actionner indépendamment l'un ou l'autre de ces volets pour n'éjecter que la pose entachée d'un défaut d'impression. Si ce système peut fonctionner à satisfaction pour des poses de moyenne à grande taille, il n'en va pas de même lorsqu'il s'agit de traiter des poses de petites tailles comme celles des emballages de cigarettes par exemple. En effet, si la largeur de la bande peut comprendre une dizaine de poses, il serait nécessaire de prévoir autant de volets actionnables de façon indépendante. On comprend alors que ce genre de dispositif deviendrait vite trop délicat, compliqué et même onéreux à mettre en oeuvre. De plus, la largeur des volets et leur nombre devant être obligatoirement fonction de la largeur et du nombre des poses par lignée, on se rend aussi compte que ce dispositif serait mal adapté aux changements de travaux, comme par exemple lorsque l'on souhaiterait passer d'une impression de dix poses à une autre ne comptant plus que six poses par lignée.

Un autre inconvénient des dispositifs comprenant plusieurs volets d'éjection disposés côte à côte, provient du fait qu'ils engendrent, dans la station de réception, des piles de poses de hauteur différente. En effet, si une rangée du format d'impression comprend plusieurs poses entachées de défauts, ces dernières seront automatiquement éjectées alors que les poses des rangées adjacentes auront passé le contrôle qualité et seront donc toutes collectées. De ce fait, on obtiendra dans la station de réception un nombre variable et aléatoire de poses par pile, ce qui est jugé inacceptable par les fabricants et clients utilisant ces machines.

Un autre inconvénient, grevant les machines éjectant la gâche directement au sein de leur ligne de production, découle de leur vitesse élevée de travail. En effet, si ces machines sont capables de travailler à des cadences élevées, elles compliquent en revanche sensiblement les dispositifs d'éjection qui doivent se limiter à des temps de réaction très courts et rendent très délicat le suivi par des capteurs d'une pose devant être éjectée. De plus, l'éjection à haute vitesse augmente également les risques de bourrages qui peuvent alors causer un arrêt de toute la machine de production et contribuent à des gâches supplémentaires importantes de bande lors de chaque remise en route. A ces vitesses, on comprend également qu'il devient très difficile d'éjecter, au bon moment, la bonne pose qui avait été détectée plus en amont comme étant non conforme par le système de contrôle de qualité.

Pour pallier à cet inconvénient, on a également pensé à éjecter les deux poses adjacentes à la pose défectueuse afin de pouvoir garantir que cette dernière a bien été éjectée. Or, cette manière de procéder contribue aussi à augmenter inutilement la gâche et accentue davantage l'inconvénient du nombre variable de poses par pile obtenue à la réception.

Pour pallier aux problèmes liés à l'éjection à haute vitesse, une solution consistait simplement à ne pas éjecter les poses défectueuses et à effectuer cette opération manuellement après la réception en piles. Bien que le système de contrôle de qualité puisse être capable d'indiquer dans quelle pile devrait se trouver une pose détectée comme étant défectueuse, ce travail de triage des poses devenait vite long, astreignant et peu évident pour les petits défauts moins visibles. De plus, le risque de ne plus retrouver les poses défectueuses persistait et ne permet plus d'assurer une qualité irréprochable à 100%. Enfin, en raison des cadences élevées de production, de l'ordre de 8'000 à 12'000 boîtes par minute, il était aussi nécessaire que plusieurs personnes soient affectées simultanément au tri manuel de la production d'une même machine.

Si toutes les poses d'une feuille ou d'un format imprimé sont généralement identiques, il existe parfois des cas où ces poses puissent légèrement différer les unes des autres par trois ou quatre types d'impressions différentes réalisées simultanément dans le même format d'impression. C'est notamment le cas des emballages de cigarettes où l'on trouve typiquement, dans une cartouche vendue dans le commerce, un mélange de plusieurs modèles de boîtes pouvant être différenciés par de petites inscriptions distinctes les unes des autres. Ainsi, certaines poses ou boîtes comporteront par exemple l'inscription *"Nuit gravement à la santé",* d'autres *"Fumer provoque le cancer"* ou encore *" Fumer met en danger les enfants des femmes enceintes".* Ce mélange de modèles de boîtes que l'on doit trouver dans une même cartouche de cigarettes fait partie des exigences des fabricants. C'est la raison pour laquelle, les poses d'une même feuille ou d'un même format d'impression destiné à la confection d'emballages de cigarettes ne seront pas toutes identiques mais comporteront généralement un mélange de quelques modèles de poses légèrement différents. Or dans ce cas, il faut s'attendre à ce que cette pluralité de modèles engendre de nouveaux problèmes dans la reconnaissance automatique des défauts d'impression, principalement durant la phase visant à comparer l'impression avec non plus un seul modèle de référence mais avec un choix de plusieurs modèles possibles légèrement différents les uns des autres.

Le but de la présente invention est de surmonter les problèmes évoqués et de remédier, au moins en partie, aux inconvénients des solutions susmentionnées en fournissant un procédé de contrôle de la qualité d'éléments plats conforme à ce qu'énonce la revendication 1 et un dispositif pour la mise en oeuvre automatique de ce procédé selon la revendication 6.

Grâce à cette solution, la qualité de la production peut être assurée à 100%, évitant ainsi le retour de séries entachées de défauts. La gâche peut être réduite à sa valeur minimale, la main d'oeuvre nécessaire peut être réduite à une seule personne en cas de tri manuel et ceci malgré des vitesses de production élevées. Les bourrages tels qu'ils apparaissaient suite à de mauvaises éjections, ainsi que les arrêts machine qui s'en suivaient, peuvent à présent être totalement évités. La solution préconisée par la présente invention offre donc aussi des avantages d'ordre économique. De plus, l'assurance d'obtenir des piles de poses complètes, sans perturbation de la production, est également garantie. Enfin le dispositif de la présente invention a également l'avantage d'être compact et amovible.

D'autres particularités et avantages de la présente invention apparaîtront au cours de la description qui va suivre. Cette description présente un mode de réalisation pris à titre nullement limitatif et illustré par les figures schématiques annexées dans lesquelles:
La figure 1 représente une vue en élévation d'un exemple d'une ligne de production telle que connue de l'état actuel de la technique,
la figure 2 représente une vue en plan d'une portion de bande imprimée,
la figure 3 représente une vue en élévation du dispositif de contrôle de qualité des éléments plats de la présente invention,
les figures 4a, 4b et 4c représentent respectivement le détail d'une pile conventionnelle de poses, celui d'une pile modèle formée de trois poses et l'illustration schématique de ces trois poses prises comme modèles de référence.

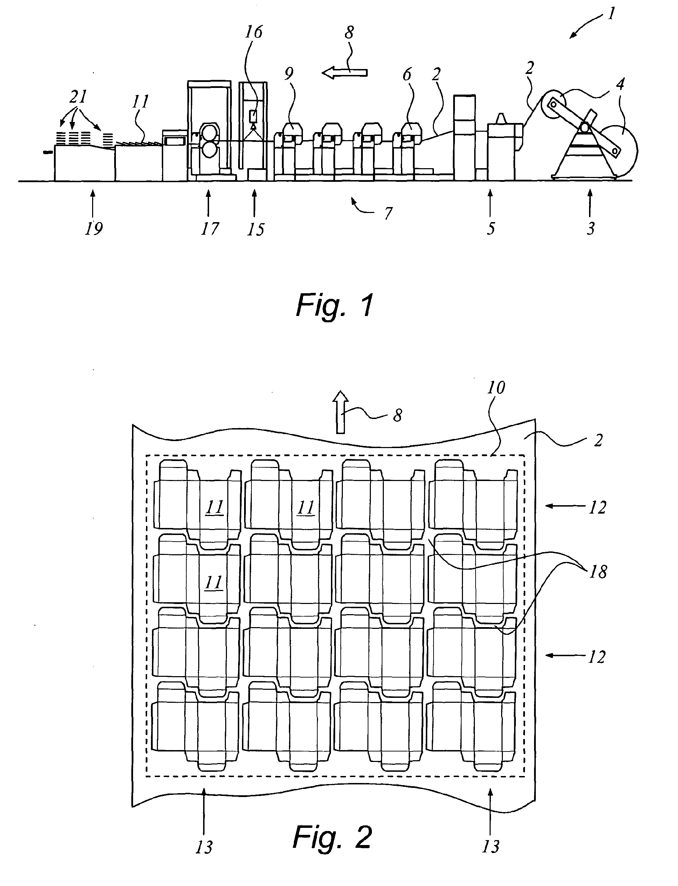

La figure 1 présente une vue schématique d'une machine 1 de production d'emballages destinée à la fabrication de boîtes pliantes à partir d'une matière en bande 2. Cette machine, ou ligne de production, comprend tout d'abord un dérouleur 3 de bande supportant des bobines 4 de carton par exemple. Une station d'introduction 5 permet ensuite d'acheminer la bande 2 vers le premier groupe imprimeur 6 de la station d'impression 7 selon la direction d'avance de la bande donnée par la flèche 8. Dans l'exemple de la figure 1, sont montrés quatre groupes imprimeurs successifs qui permettent de réaliser une impression classique en quadrichromie.

Comme mieux visible sur la figure 2, la bande 2 est imprimée d'un format d'impression 10 lors de chaque tour complet des cylindres d'impression des différents groupes imprimeurs. Ce format 10 est illustré dans cette figure par un trait interrompu. Des poses 11 d'un même format 10 sont disposées en lignées 12, ou rangées 13 en accord avec le sens de déplacement de la bande 2 donné par la flèche 8. Chaque pose 11 représente une boîte sous une forme développée dont on a encore représenté ici les futurs traits de pliage. De façon à simplifier la figure, les motifs d'impression de ces boîtes n'ont pas été représentés. On notera à ce propos que l'on utilise indifféremment la terminologie de poses, de découpes de boîtes ou plus généralement d'éléments plats pour désigner les mêmes éléments 11. Toutefois, pour des raisons pratiques découlant de la longueur de ces termes, on utilisera plus couramment la terminologie de poses au détriment des deux autres dans la suite de cette description.

En revenant à la figure 1, on voit qu'à la sortie du dernier groupe imprimeur 9 la bande 2 entre dans une station de contrôle de qualité 15 ayant pour but de vérifier que l'impression n'a pas été entachée de défauts tels que bavures, trous d'impression, lignes parasites etc... Cette opération de contrôle s'effectue notamment au moyen d'une caméra 16 qui ausculte toute la surface d'un format d'impression 10 et détermine, par comparaison avec un format mémorisé défini comme modèle, si la portion de bande examinée est entachée d'un défaut. Si tel est le cas, le dispositif de contrôle de cette station 15 peut déterminer dans quelle lignée 12 et dans quelle rangée 13 du format 10 le défaut a été détecté.

Suite au contrôle de la qualité, la bande est amenée dans une station de découpage 17, laquelle va permettre de séparer toutes les poses 11 du reste de la bande 2 en générant généralement des déchets intercalaires 18 qui sont alors immédiatement retirés. Les poses 11 sont ensuite mises en nappe dans une station de réception 19 avant d'être empilées par rangées et de former des piles 21 pouvant être palettisées en vue de leur stockage ou de leur transport hors de la ligne de production 1.

La ligne de production présentée à la figure 1 utilise une matière en bande et une station de découpage rotatif. Toutefois, il est bien clair que l'on aurait également pu présenter une ligne de production utilisant comme support d'impression des feuilles de grand format, plutôt qu'une matière en bande, et utilisant une platine de découpage à plat, plutôt qu'un organe de découpage rotatif. Aussi, d'autres variantes auraient encore pu être suggérées pour illustrer une telle ligne de production, comme la suppression de la station de contrôle de qualité 15 par exemple.

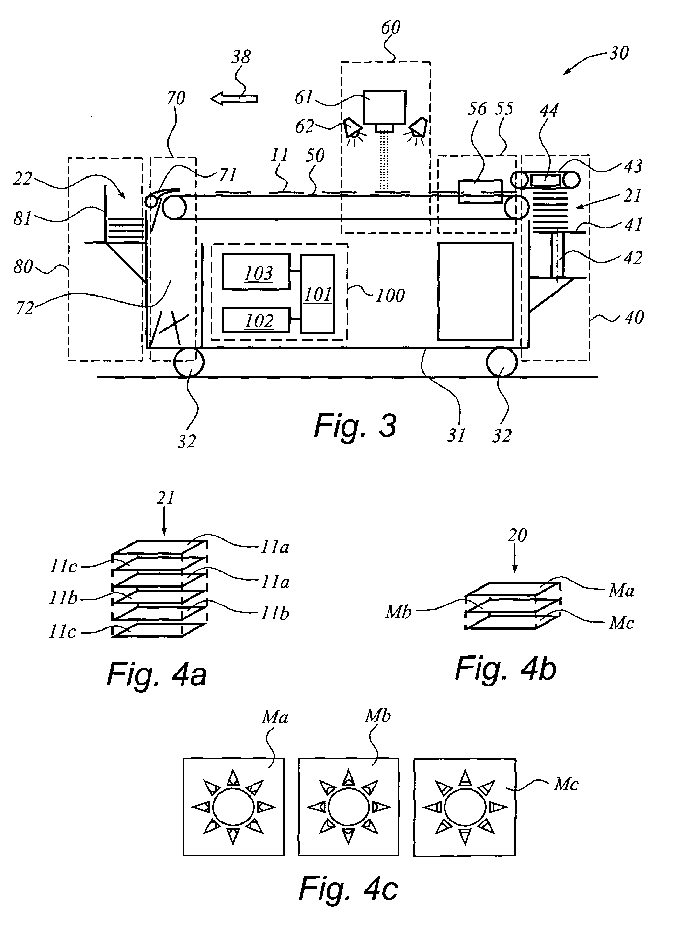

La figure 3 représente une vue en élévation du dispositif de contrôle de qualité de la présente invention. Ce dispositif 30 constitue un module indépendant de la machine ou ligne de production 1 et est destiné à l'auscultation de la qualité d'impression et/ou découpage des poses 11 issues de la station de réception 19. Selon le sens de déplacement des poses donné par la flèche 38, ce dispositif 30 comprend d'amont en aval, une unité d'introduction 40 des poses 11, un transporteur 50 pour l'avance de ces poses au travers d'une zone d'auscultation 60, une unité d'éjection 70 puis une unité de réception 80 des poses contrôlées qui ont été jugées conformes aux exigences minimales de qualité.

Le dispositif 30 est formé d'un bâti 31 monté sur des roulettes 32 de façon à le rendre facilement mobile. L'unité d'introduction 40 comprend notamment une table 41 sur laquelle peut être chargée au moins une pile 21 de poses 11. Cette table est animée d'un mouvement vertical grâce à un piston 42 permettant d'assurer le positionnement du sommet de la pile 21 à un niveau constant afin de garantir une introduction correcte des poses 11 sur le transporteur 50.

La commande du mouvement vertical de la table peut être soit mécanique, grâce à un ressort de compression par exemple, soit pneumatique ou hydraulique dans le cas de l'utilisation d'un piston, soit électrique à l'aide d'un moteur par exemple. L'unité d'introduction peut bien sûr comporter divers organes électroniques et/ou optiques, voire électriques, assurant le contrôle du mouvement de la table 41. Telle que prévue dans l'illustration donnée par la figure 3, l'unité d'introduction est équipée d'un organe introducteur 43 agencé au-dessus de la pile 21 de sorte que la pose située en son sommet puisse être entraînée en direction de la flèche 38 par l'organe introducteur 43 lorsqu'il est mis en mouvement. Ce dernier peut être matérialisé par un tapis, des courroies, des rouleaux ou par un dispositif à ventouses par exemple. De plus, il est possible si nécessaire d'y adjoindre une chambre d'aspiration 44 favorisant la friction entre la face supérieure de la pose et la surface inférieure de l'organe introducteur 43. En variante, il serait bien sûr possible de prévoir une unité d'introduction 40 comprenant un dispositif introduisant les poses par le dessous de celles-ci plutôt que par le dessus. Toutefois, l'agencement de l'introduction tel que présenté à la figure 3 permet de s'affranchir de la pression variable exercée par le poids en constante diminution de la pile et de garantir alors une pression constante optimale de chaque pose contre l'organe introducteur 43.

Les poses 11 sont alors successivement introduites sur le transporteur 50 afin de pouvoir les acheminer dans la zone d'auscultation 60 prévue pour effectuer le contrôle de qualité de leur impression et/ou de leur découpage. Si nécessaire, la partie amont du transporteur 50 peut comporter une zone de taquage 55 dans laquelle chaque pose est alignée, par un organe d'alignement 56, parallèlement à un des bords longitudinaux du transporteur de façon à ce qu'elle se présente toujours sous un angle horizontal constant. De ce fait, les éventuels glissement et rotation des poses lors de leur introduction peuvent être corrigés et maîtrisés. Pour éviter tout autre glissement des poses durant leur convoyage sur le transporteur 50, ce dernier peut également comprendre un système d'aspiration similaire à celui de la chambre d'aspiration 44 mentionnée précédemment. Dans ce cas, le transporteur 50 peut être matérialisé avantageusement par un ou plusieurs tapis perforés, par des courroies ou encore par des rouleaux entraînés.

Le dispositif de la zone d'auscultation 60 comprend au moins une caméra 61 agencée au-dessus du transporteur 50 et tournée vers le bas pour faire face à la surface imprimée des poses. Un dispositif d'éclairage 62 permet de garantir une luminosité suffisante de la zone auscultée. Cet éclairage peut être réalisé au moyen de lampes flash ou d'une lumière constante par exemple. Si nécessaire, il est également possible de prévoir un éclairage procurant une lumière d'une certaine longueur d'onde de façon à améliorer davantage le contraste des motifs imprimés.

Dans le cas où une pose 11 aurait été reconnue comme étant non conforme aux exigences de qualités requises par le dispositif de la zone d'auscultation 60, elle sera éjectée durant son passage dans l'unité d'éjection 70. Cette dernière peut alors être formée d'au moins un organe déviateur 71 qui, lorsqu'il est actionné, force la déviation vers le bas de la pose 11 défectueuse qui tombe alors dans un bac de récupération 72.

Les poses 11 qui ont passé avec succès le contrôle de qualité ne sont pas éjectées du transporteur 50 par l'organe déviateur 71 mais poursuivent leur chemin dans le sens de la flèche 38 pour finalement être collectées dans l'unité de réception 80. Cette dernière peut simplement se composer d'un réceptacle 81 dans lequel toutes les poses conformes sont récoltées en au moins une nouvelle pile 22. Afin de ne pas entraver la collecte des poses, le réceptacle 81 pourrait être avantageusement animé d'un mouvement vertical vers le bas de façon à ce que la surface supérieure de la nouvelle pile 22 reste à un niveau constant. Le mécanisme permettant ce mouvement vertical peut être similaire à celui décrit précédemment pour le déplacement de la table 41 et peut si nécessaire dépendre également de signaux envoyés par d'éventuels capteurs électromécaniques ou photoélectriques. De façon à améliorer davantage la formation des nouvelles piles 22, l'unité de réception pourrait être dotée d'un rangeur, non représenté, animé d'organes oscillants qui permettraient de taquer les côtés des nouvelles piles 22 ou de faire vibrer ces dernières en vue de créer un empilement de poses parfaitement bien alignées.

L'un des buts de la présente invention est de pouvoir assurer la formation de piles complètes, à savoir la formation de nouvelles piles 22 ayant un nombre de poses constant choisi en fonction des besoins. La valeur de ce nombre peut être consignée dans un paramètre de consigne n introduit au préalable dans les premières étapes du procédé de la présente invention. Cette valeur correspondrait alors au nombre de poses que toutes les nouvelles piles 22 devraient avoir selon les exigences du client ou du fabricant. Ainsi, à partir d'une pile 21 disposée dans l'unité d'introduction 40, le dispositif 30 sera donc à même de restituer plusieurs nouvelles piles 22 comportant chacune n poses 11 conformes aux critères de qualité. Dans le cas où, en cours de processus, le nombre de poses restant dans la pile 21 devient inférieur à la valeur n, le dispositif 30 se met alors en attente de recevoir, dans l'unité d'introduction 40, un complément de poses 11 ou une nouvelle pile 21 permettant de terminer la nouvelle pile 22 de l'unité de réception jusqu'à ce que son nombre de poses soit égal à la valeur du paramètre de consigne n.

Les différentes unités et organes du dispositif 30 peuvent être avantageusement pilotés et coordonnés par une unité centrale 100 se composant d'un ordinateur 101 auquel peuvent être raccordés une interface de commande 102, comme un clavier ou un écran tactile, et un périphérique de sortie 103 tel qu'un écran ou une imprimante par exemple. Pouvant être dotée d'un logiciel spécifique, l'unité centrale 100 est alors capable de piloter par exemple la montée de la table 42, la vitesse d'avance de l'introducteur 43 et du transporteur 50, l'organe d'alignement 56, la caméra 61 et les lampes d'éclairage 62, l'organe d'éjection 71 et la descente du réceptacle. Avantageusement, l'unité centrale 100 permet également de gérer diverses situations critiques à l'aide de capteurs de détection. De ce fait il est possible de détecter la fin du passage de la pile 21, un défaut d'alignement des poses 11 dans la zone de taquage 55, un défaut d'éclairage ou un disfonctionnement de l'organe éjecteur 71.

L'unité centrale 100 permet aussi, voire avant tout, une gestion des opérations effectuées dans la zone d'auscultation 60. Elle permet de recenser tous les genres de défauts possibles et de fixer quelles en sont les tolérances de qualité applicables. Pour ce faire, la caméra 61 permet, par l'analyse de chacun des pixels de l'image de la pose, de détecter les contours de cette pose, les lignes de changement de couleurs, les aplats, les intensités de chacune des couleurs, etc... Grâce à un modèle de référence mémorisé au préalable dans l'unité centrale 100 et grâce aux différents paramètres fixant les tolérances admissibles, il est alors possible de procéder par comparaison à la détection de tout défaut d'impression et de découpage de chacune des poses.

Les figures 4a, 4b et 4c font référence au problème posé par les différents types 11 a, 11 b, 11 c de poses, au nombre de trois dans cet exemple non limitatif, qu'il est possible de trouver dans une même pile 21 (figure 4a). On rappellera que ce problème est relatif aux poses présentant de légères différences entre elles, comme des inscriptions distinctes apposées sur des emballages de cigarettes d'une même cartouche. De façon à schématiser ces différences, la figure 4c présente trois types de poses modèles Ma, Mb, Mc dont le motif présente un soleil à chaque fois légèrement différent. Afin que le dispositif 30 puisse différentier ces poses modèles et ne pas attribuer l'une ou l'autre de ces différences à un défaut d'impression, il convient d'initialiser le dispositif à la reconnaissance de tous les différents types de poses qu'il sera possible de rencontrer dans une pile 21.

Pour ce faire, on introduira au préalable sur la table 41 une pile modèle 20 (figure 4b) formée des poses modèles Ma, Mb, Mc, ... Mz, de qualité irréprochable. On veillera en outre à ce que cette pile modèle 20 comprenne au moins tous les différents types de poses possibles, soit, selon l'exemple donné ici, les trois types 11 a, 11 b, 11 c de poses représentés par les poses modèles Ma, Mb, Mc.

Durant cette phase de reconnaissance des différents types possibles, le dispositif 30 va passer en revue toutes les poses de la pile modèle 20 et en mémoriser leur image. A l'aide de la caméra 61 et d'un logiciel approprié, l'unité centrale 100 va alors pouvoir détecter et dénombrer automatiquement les différents types de poses rencontrés par comparaison des légères différences avec les poses modèles mémorisées qui ont déjà été auscultées. Si plusieurs poses modèles d'un même type sont détectées durant cette phase de reconnaissance, leurs images peuvent être avantageusement moyennées avant d'être mémorisées. Ainsi, plusieurs passages des poses de la même pile modèle 20 utilisée comme référence pourraient également être effectués de façon à moyenner les images obtenues lors de chacun des passages. A la fin de cette phase de reconnaissance, l'unité centrale 100 aura mémorisé autant d'images de référence qu'il existait de poses de types différents. Dans l'exemple donné par les figures 4a, 4b, 4c, l'unité centrale aura donc mémorisé trois images de références correspondant aux images des poses modèles Ma, Mb et Mc. Grâce à ce dispositif, l'opérateur n'est avantageusement pas obligé d'introduire manuellement une à une les poses modèles prises comme référence pour en mémoriser leur image. De plus, le dénombrement des différents types de poses possibles se faisant aussi automatiquement, le processus simplifie d'autant plus la procédure d'initialisation du dispositif 30.

Les étapes successives et préférées du procédé permettant d'utiliser avantageusement ledit dispositif à partir des poses 11 issues d'une machine d'impression et/ou de découpage 1, pourvue ou non d'une station de contrôle de qualité 15, consistent donc à :
1° effectuer une phase de reconnaissance de tous les différents types 11a, 11 b, 11c, ...11 z d'éléments plats qu'il est possible de rencontrer dans les piles 21,
2° introduire la valeur d'un paramètre de consigne n qui est fonction du nombre d'éléments plats 11 désiré dans les nouvelles piles 22,
3° effectuer le chargement d'au moins une pile 21 dans l'unité d'introduction,
4° faire défiler au moins un élément plat 11 d'au moins une pile 21 au travers d'une zone d'auscultation 60 permettant de lire la qualité de l'impression et/ou du découpage de l'élément plat 11 ausculté,
5° définir à quel type 11a, 11b, 11c, ...11z, l'élément plat 11 ausculté correspond le mieux,
6° détecter la présence d'éventuels défauts d'impression et/ou de découpage dans l'élément plat 11 ausculté,
7° éjecter cet élément plat s'il présente des défauts d'impression et/ou de découpage,
8° empiler cet élément plat dans une unité de réception 80 de façon à former une nouvelle pile 22 s'il n'a pas été éjecté,
9° si tous les éléments plats11 de la pile 21 ont été auscultés, attendre le chargement d'au moins une autre pile 21,
10° recommencer le procédé à la 4^{ème} étape jusqu'à ce que le nombre d'éléments plats 11 de la nouvelle pile 22 soit égal à la valeur dudit paramètre de consigne n,
11° effectuer le déchargement de la nouvelle pile 22 de l'unité de réception 80,
12° recommencer le processus à la 4^{ème} étape jusqu'à ce que toutes les piles 21 d'une même série aient été traitées.

Bien que prévu initialement comme étant un module indépendant de la ligne de production 1, le dispositif 30 de contrôle de qualité de la présente invention pourrait être relié à ladite ligne de production par un chargeur automatisé pouvant transporter les produits, ou piles 21, issus de la station de réception de la ligne de production 1 et les déposer automatiquement dans l'unité d'introduction du dispositif 30. De ce fait, le chargement automatique des piles 21, tel que défini dans le procédé, deviendrait alors dépendant de la ligne de production 1, en particulier de sa cadence de production.

De manière analogue, une automatisation des opérations de manutention effectuées dans l'unité de réception 80 pourrait être envisagée dans le but de déplacer les nouvelles piles 22 sur une palette, un tapis ou un chariot d'évacuation afin de libérer la place qu'elles occupaient dans le réceptacle 81. De plus, le nombre de piles que peut comporter d'un côté l'unité d'introduction 40 et de l'autre l'unité de réception 80, ne dépend que des multiples variantes qu'il est encore possible d'apporter au dispositif de la présente invention.

## Revendications

1. Procédé de contrôle de la qualité d'éléments plats (11 ) issus d'une machine d'impression et/ou de découpage (1) produisant des éléments plats d'au moins un type (11 a, 11 b, 11 c, ... 11 z), **caractérisé en ce qu'**il consiste à effectuer les étapes successives suivantes :
a) procéder à une phase de reconnaissance de tous les différents types (11a, 11 b, 11c, ...11 z) d'éléments plats (11) qu'il est possible de rencontrer dans des piles (21),
b) introduire la valeur d'un paramètre de consigne (n) définissant un nombre choisi d'éléments plats par pile,
c) effectuer le chargement d'au moins une pile (21) d'éléments plats (11 ) dans une unité d'introduction (40) d'un dispositif de contrôle de qualité (30),
d) faire défiler au moins un élément plat (11 ) d'au moins une pile (21); de l'unité d'introduction (40), au travers d'une zone d'auscultation (60) permettant de lire la qualité de l'impression et/ou du découpage de l'élément plat (11) ausculté,
e) définir à quel type (11 a, 11 b, 11 c, ...11 z), l'élément plat (11) ausculté correspond le mieux,
f) détecter la présence d'éventuels défauts d'impression et/ou de découpage dans l'élément plat (11) ausculté,
g) éjecter l'élément plat (11 ) ausculté s'il présente des défauts d'impression et/ou de découpage,
h) empiler l'élément plat dans une unité de réception (80) de façon à former une nouvelle pile (22) s'il n'a pas été éjecté,
i) si tous les éléments plats (11 ) de la pile (21) ont été auscultés, attendre le chargement d'au moins une autre pile (21),
j) recommencer le procédé à l'étape d) jusqu'à ce que le nombre d'éléments plats (11) de la nouvelle pile (22) soit égal à la valeur dudit paramètre de consigne (n),
k) effectuer le déchargement de la nouvelle pile (22) de l'unité de réception (80),
1) recommencer le procédé à l'étape d) jusqu'à ce que toutes les piles (21) d'une même série aient été traitées.

2. Procédé selon la revendication 1, **caractérisé en ce que** l'étape a) s'effectue à l'aide d'une pile modèle (20) comprenant au moins autant d'éléments plats modèles (Ma, Mb, Mc, ... Mz), définis comme étant des références de qualité irréprochable, qu'il y a de types (11a, 11b, 11c,... 11z) d'éléments plats (11) différents.

3. Procédé selon la revendication 2, **caractérisé en ce que** l'étape a) comprend les sous étapes suivantes :
a1) effectuer le chargement de la pile modèle (20) dans l'unité d'introduction (40),
a2) faire défiler le premier élément plat modèle (Ma, Mb, Mc, ... Mz) au travers de ladite zone d'auscultation (60),
a3) mémoriser l'image dudit élément plat modèle,
a4) empiler ledit élément plat modèle dans l'unité de réception (80),
a5) recommencer le procédé à l'étape a2) jusqu'au dernier élément plat modèle de là pile modèle (20).

4. Procédé selon la revendication 3, **caractérisé en ce qu'**il comprend une sous étape supplémentaire a6) visant à moyenner les images des éléments plats modèles (Ma, Mb, Mc, ... Mz) de même type afin de ne mémoriser qu'un élément plat modèle par type d'élément plat.

5. Procédé selon la revendication 1, **caractérisé en ce que** le chargement des piles (21) et le déchargement des nouvelles piles (22) se fait de manière automatique.

6. Procédé selon la revendication 5, **caractérisé en ce que** le chargement automatique des piles (21) est fonction de ladite machine d'impression et/ou de découpage (1).

7. Dispositif (30) pour la mise en oeuvre du procédé selon la revendication 1, **caractérisé en ce qu'**il comprend successivement une unité d'introduction (40) des éléments plats (11), un transporteur (50) pour le convoyage de ces éléments plats au travers d'une zone d'auscultation (60), une unité d'éjection (70) et une unité de réception (80).

8. Dispositif (30) selon la revendication 7, **caractérisé en ce qu'**il comprend, dans une partie amont du transporteur (50), une zone de taquage (55) équipée d'un organe d'alignement (56) desdits éléments plats (11).

9. Dispositif (30) selon les revendications 7 ou 8, **caractérisé en ce que** toutes lesdites unités (40, 70, 80), le transporteur (50), les organes (56, 61, 62) de la zone de taquage (55) et de la zone d'auscultation (60), sont pilotés et coordonnés par une unité centrale (100).
